# EUROPÄISCHE PATENTANMELDUNG

(11) **EP 1 106 966 A2**
(43) Veröffentlichungstag der Anmeldung: **13.06.2001**
(21) Anmeldenummer: 00125889.6
(22) Anmeldetag: 27.11.2000
(51) Int. Cl.: G01C 21/26

(54) **Anordnung eines Lautsprechers in einem Kraftfahrzeug, insbesondere in einem Navigationssystem**

(30) Priorität: 01.12.1999 DE 19957902
(71) Anmelder: Mannesmann VDO AG, 60388 Frankfurt am Main (DE)
(72) Erfinder: Lauth, Stephan, 35614 Asslar (DE)
(74) Vertreter: Richter, Jürgen

(57) **Zusammenfassung**

Die Erfindung betrifft eine Anordnung eines Lautsprechers (6) in der Mittelkonsole oder im Armaturenbrett eines Kraftfahrzeuges. Der Lautsprecher (6) ist durch eine schall- und flüssigkeitsdurchlässige Abdeckung (Lautsprechergitter 5) vom Fahrgastraum getrennt, die in einer von der vertikalen abweichenden Einbauebene angeordnet ist. Erfindungsgemäß ist vorgesehen, daß der Lautsprecher (6) senkrecht im Fahrzeug angeordnet ist und das Gehäuse mindestens eine Öffnung (9) außerhalb der Abdeckung aufweist, die ein Abfließen von in das Gehäuse eingedrungener Flüssigkeit ermöglicht. Die Anordnung ist besonders für autarke Kraftfahrzeugnavigationssystemen geeignet, bei denen der Lautsprecher und eine Eingabeeinheit in einem gemeinsamen Gehäuse angeordnet sind.

## Beschreibung

Die Erfindung betrifft die Anordnung eines Lautsprechers in der Mittelkonsole oder im Armaturenbrett eines Kraftfahrzeugs, wobei der Lautsprecher durch eine schall- und flüssigkeitsdurchlässige Abdeckung vom Fahrgastraum getrennt ist, die in einer von der vertikalen abweichenden Einbauebene angeordnet ist. Weiterhin betrifft die Erfindung ein Navigationssystem für Kraftfahrzeuge mit einer zentralen Recheneinheit, die mittelbar oder unmittelbar mit einer Eingabeeinheit und einer einen Lautsprecher aufweisenden Ausgabeeinheit verbunden ist, sowie mit der Recheneinheit verbundenen Mitteln zur Bestimmung der Fahrzeugposition, wobei die Recheneinheit zur Berechnung einer Route zwischen einem Start und einem Zielort sowie zur Ausgabe von Fahrhinweisen über den Lautsprecher ausgebildet ist.

In Kraftfahrzeugen werden Lautsprecher vorwiegend für Audiosysteme eingebaut. Dabei werden üblicherweise im Bereich des Armaturenbretts Lautsprecher angeordnet, die durch eine Abdeckung optisch vom Fahrgastraum getrennt sind. Die Einbaulage des Lautsprechers und der Abdekkung ist dabei in der Regel an die Neigung des Armaturenbretts angepaßt und weicht daher von der vertikalen Einbauebene ab. Eine solche von der vertikalen abweichende Einbaulage hat den Nachteil, daß die Wiedergabequalität durch eindringenden Staub, der sich auf der Membran des Lautsprechers absetzt, beeinträchtigt wird. Darüber hinaus besteht eine erhöhte Beschädigungsgefahr dadurch, daß Feuchtigkeit beispielsweise bei Regen und geöffnetem Fahrzeugdach eindringen kann und die Membran beschädigt. Die genannten Gefahren sind umso größer, je mehr die Einbaulage des Lautsprechers und der Abdeckung sich der horizontalen Richtung annähert.

Darüber hinaus werden in Kraftfahrzeugen zunehmend Navigationssysteme eingebaut. Bei diesen Navigationssystemen kann die Zielführung sowohl optisch als auch akustisch erfolgen. Bei akustischer Zielführung können die im Fahrzeug vorhandenen Lautsprecher eines Audiosystems grundsätzlich mitbenutzt werden. Es sind jedoch auch autarke Navigationssysteme bekannt, die über eine eigene Ausgabeeinheit mit einem Lautsprecher verfügen. Ein solches Navigationssystem weist beispielsweise einen an einer schwenkbaren Vorrichtung im Bereich der Mittelkonsole befestigten Monitor als Ausgabeeinheit auf, in den aus Platzgründen der Lautsprecher so angeordnet ist, daß die Schallauskopplung auf der Monitorrückseite und damit in eine von dem Fahrzeugführer abgewandte Richtung erfolgt. Auch durch diese Anordnung ergibt sich eine schlechte Sprachqualität.

Bei Anordnung eines Lautsprechers eines autarken Navigationssystems in ergonomisch günstiger Position im Bereich der Mittelkonsole oder des Armaturenbretts zwischen dem Fahrer und dem Beifahrerplatz ergibt sich zudem die eingangs genannte Problematik des Eindringens von Flüssigkeit in besonderer Weise. Eine in diesem Bereich angeordnete Bedieneinheit eines Navigationssystems liegt nämlich in unmittelbarer Nähe zu Aschenbecher, Getränkehalter usw. Die Membran eines ebenfalls in diesem Bereich angeordneten Lautsprechers ist daher besonders durch Zigarettenasche oder zuckerhaltige Getränke gefährdet und muß gesondert geschützt werden. Dies kann beispielsweise durch eine zusätzliche Schutzeinrichtung, wie eine Schutzfolie, erfolgen. Dies stellt jedoch einen zusätzlichen Kostenfaktor dar.

Aufgabe der Erfindung ist es daher, eine Anordnung eines Lautsprechers anzugeben, die ohne zusätzliche Schutzvorrichtungen auskommt und dennoch ein hohes Maß an Sicherheit gegen Ausfall durch Verschmutzung bietet. Eine weitere Aufgabe der Erfindung ist es, ein Navigationssystem mit den selben Vorteilen anzugeben.

Die erstgenannte Aufgabe wird dadurch gelöst, daß der Lautsprecher in einem Gehäuse senkrecht im Fahrzeug angeordnet ist und das Gehäuse mindestens eine Öffnung außerhalb der Abdeckung aufweist, die ein Abfließen von in das Gehäuse eingedrungener Flüssigkeit ermöglicht. Unter einer senkrechten Anordnung des Lautsprechers im Fahrzeug wird eine Anordnung verstanden, bei der die Schallauskoppelfläche des Lautsprechers im wesentlichen senkrecht zum Fahrzeugboden ausgerichtet ist.

Bei der erfindungsgemäßen Ausgestaltung sind somit die Abdeckung und der Lautsprecher in unterschiedlichen Ebenen angeordnet. Die Abdekkung ist an die äußeren Gegebenheiten der Mittelkonsole oder des Armaturenbretts angepaßt, während der Lautsprecher senkrecht im Fahrzeug angeordnet ist. Durch die von der vertikalen abweichende Einbauebene der Abdeckung kann somit grundsätzlich das Eindringen von Zigarettenasche oder Flüssigkeit nicht verhindert werden, jedoch wird durch den senkrechten Einbau des Lautsprechers die eindringende Flüssigkeit nicht auf die Membran gelangen. Ferner ist vorgesehen, daß das Gehäuse, in dem der Lautsprecher angeordnet ist, eine Öffnung außerhalb der Abdeckung aufweist, die ein Abfließen von in das Gehäuse eingedrungener Flüssigkeit ermöglicht. Durch diese Maßnahme wird auch bei Eindringen größerer Flüssigkeitsmengen durch die Abdeckung in das Gehäuse eine Beschädigung der Membran vermieden. Die Vorteile der erfindungsgemäßen Anordnung treten umso mehr zu Tage, je weiter die Einbauebene der Abdeckung von der vertikalen Ebene abweicht. Insbesondere bei Einbau des Lautsprechers in die Mittelkonsole wird ein geneigter Einbau der Abdeckung besonders bevorzugt, da hierdurch die Auskopplung der Schallwellen in den oberen Fahrzeugbereich und somit in den Kopfbereich erreicht werden kann. Daher ist in einer besonderen Ausführungsform vorgesehen, daß die Abdeckung unter einem Winkel von mehr als 30 Grad zum senkrecht in Fahrzeug angeordneten Lautsprecher angeordnet ist. Insbesondere kann die Abdeckung auch rechtwinklig zum Lautsprecher angeordnet sein. Gerade bei der letztgenannten Anordnung ist die Gefahr einer Verschmutzung der Lautsprechermembran besonders groß, so daß die Vorteile der erfindungsgemäßen Anordnung hier besonders zum Tragen kommen.

Da die Einbauebene des Lautsprechers und der Abdeckung voneinander abweichen, ist in einer besonderen Ausführungsform vorgesehen, daß in dem Gehäuse zusätzlich eine Umlenkfläche zur Umlenkung der vom Lautsprecher ausgesendeten Schallwellen zu der schalldurchlässigen Abdeckung vorhanden ist. Hierdurch kann eine effizientere Abstrahlung der Schallwellen in Richtung des Fahrers erzielt werden.

Die Öffnungen zum Abfließen von in das Gehäuse eingedrungener Flüssigkeit können insbesondere in der Bodenfläche des Gehäuses angeordnet sein. In einer alternativen Ausführungsform weist die Bodenfläche selbst keine Öffnungen auf, jedoch sind solche in den Wandflächen vorgesehen, und zwar in dem Bereich, in dem die Wandfläche unmittelbar an die Bodenfläche anstößt.

Die spezielle Anordnung des Lautsprechers kann insbesondere bei einem autarken Navigationssystem für Kraftfahrzeuge eingesetzt werden, das eine zentrale Recheneinheit, die unmittelbar oder mittelbar mit einer Eingabeeinheit und einer einen Lautsprecher aufweisenden Ausgabeeinheit verbunden ist, sowie mit der Recheneinheit verbundene Mittel zur Bestimmung der Fahrzeugposition aufweist, wobei die Recheneinheit zur Berechnung einer Route zwischen einem Start- und eine Zielort sowie zur Ausgabe von Fahrhinweisen über den Lautsprecher ausgebildet ist. Erfindungsgemäß sind bei einem solchen Navigationssystem die Eingabeeinheit und der Lautsprecher in einem gemeinsamen Gehäuse angeordnet, das einen schall- und flüssigkeitsdurchlässigen Bereich zur Auskopplung der Schallwellen des Lautsprechers aus dem Gehäuse sowie mindestens eine Öffnung außerhalb des schalldurchlässigen Bereichs im Bereich der Bodenfläche des Gehäuses aufweist, die ein Abfließen von eingedrungener Flüssigkeit aus dem Gehäuse ermöglicht. Weiterhin ist dabei der Lautsprecher senkrecht zur Bodenfläche des Gehäuses angeordnet. Bei einem solchen Navigationssystem ergeben sich die bereits zuvor genannten Vorteile durch die Anordnung des Lautsprechers und der Abdeckung. Die bereits zuvor genannten speziellen Ausgestaltungen können auch hier mit Vorteil eingesetzt werden. Insbesondere kann das Gehäuse eine Umlenkfläche aufweisen, die unter einem Winkel zum Lautsprecher angeordnet ist, der etwa halb so groß ist wie der Winkel, unter dem der schalldurchlässige Bereich zum Lautsprecher angeordnet ist.

Die Erfindung wird nachfolgend anhand eines Ausführungsbeispiels und der Zeichnungen näher erläutert. Es zeigen:
- Figur 1: eine Aufsicht auf eine Bedienteileinheit eines Navigationssystems
- Figur 2: eine Schnittdarstellung durch ein Gehäuse mit erfindungsgemäßer Anordnung
- Figur 3: eine isometrische Ansicht in ein geöffnetes Gehäuse im Bereich des Lautsprechers.

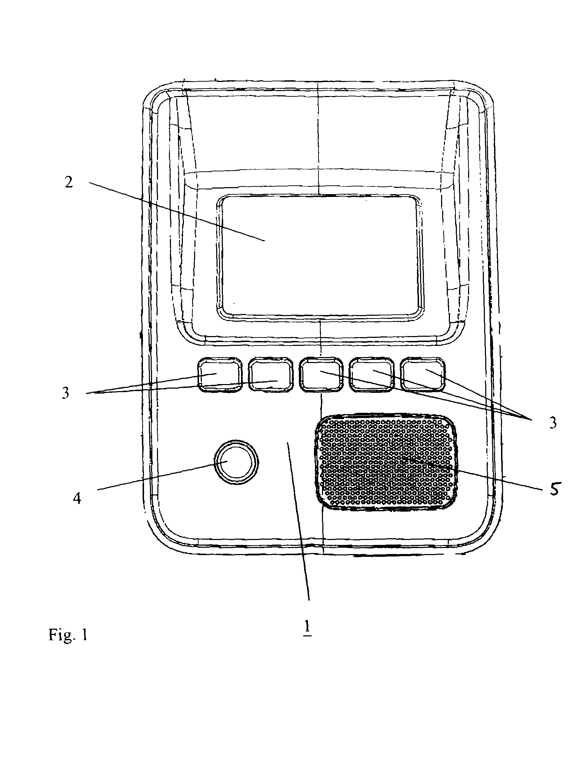

Figur 1 zeigt eine Aufsicht auf die im Fahrzeug bei eingebautem Zustand eines Navigationssystems sichtbare Oberfläche der Bedienteilblende. Das Gerät ist in die Mittelkonsole zwischen dem Fahrer- und dem Beifahrersitz integriert. Die Bedienteilblende 1 weist ein Display 2 auf, auf dem Fahrhinweise optisch ausgegeben werden können. Die Tasten 3 bilden zusammen mit dem Dreh-/Drückknopf für Menüsteuerung 4 die Eingabeeinheit des Navigationssystems. Ferner ist ein Lautsprechergitter 5 vorhanden. Die Bedien- und Anzeigeelemente sind im Kraftfahrzeug nach oben ausgerichtet, wobei das Display leicht geneigt ist. Bei einer solchen Anordnung ist die Gefahr, daß verschüttete Flüssigkeiten oder Zigarettenasche über das Lautsprechergitter 5 in das Innere des Gehäuses eindringen und die Membran des Lautsprechers beschädigen, besonders groß. Dieser Gefahr wird durch die spezielle erfindungsgemäße Anordnung begegnet.

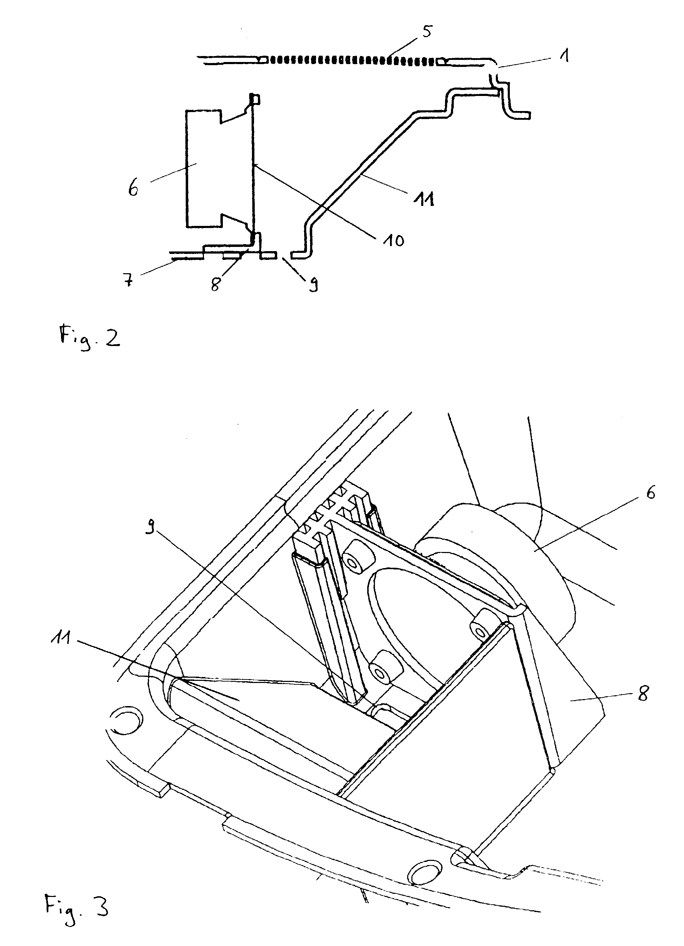

Figur 2 zeigt dazu einen Teilschnitt durch das Gehäuse. Die Bedienteilblende 1 weist dabei wiederum das Lautsprechergitter 5 auf. Der Lautsprecher 6 ist am Gehäuseboden 7 mittels eines Halters 8 senkrecht in dem Gehäuse angeordnet. Der Gehäuseboden 7 weist Aussparungen 9 auf. Eine Flüssigkeit, die über das Lautsprechergitter 5 nun von außen in das Gehäuse eindringt kann somit über die Öffnungen 9 im unteren Bereich des Gehäuses wieder aus diesem austreten. Durch die senkrechte Anordnung des Lautsprechers wird zudem erreicht, daß die Flüssigkeit nicht an die Membran des Lautsprechers 6, die von der Seite 10 des Lautsprechers her frei zugänglich ist, gelangen kann. Das Gehäuse weist weiterhin eine Umlenkfläche 11 zur Umlenkung der vom Lautsprecher 6 ausgesendeten Schallwellen, die über die Seite 10 des Lautsprechers 6 austreten, auf. Durch diese Umlenkfläche werden die Schallwellen zum Lautsprechergitter 5 reflektiert und können somit aus dem Gehäuse austreten. Die Umlenkfläche 11 ist insbesondere in einem Winkel zum Lautsprecher 6, genauer zur Seite 10 des Lautsprecher 6 angeordnet, der etwa halb so groß ist wie der Winkel zwischen dem Lautsprecher 6 bzw. der Seite 10 und dem Lautsprechergitter der im dargestellten Beispiel 90 Grad beträgt. Die Umlenkfläche 11 erfüllt gleichzeitig die Funktion einer Ablauffläche für eindringende Flüssigkeit, die somit direkt zu den Öffnungen 9 geleitet wird.

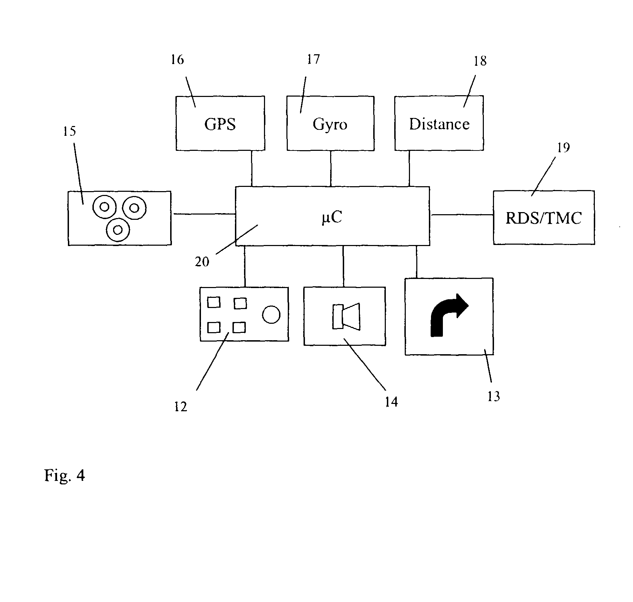

Figur 3 zeigt eine isometrische Ansicht in ein geöffnetes Gehäuse im Bereich des Lautsprechers 6. Der Lautsprecher 6 ist über einen Halter 8 senkrecht mit dem Gehäuseboden des Gehäuses verbunden. Im Bereich des Gehäusebodens ist eine Öffnung 9 angebracht, über die eindringende Flüssigkeit abfließen kann. Ferner ist eine Umlenkfläche 11 vorhanden, die die waagrecht aus dem Lautsprecher 6 austretenden Schallwellen nach oben hin zum hier nicht dargestellten Lautsprechergitter ablenkt.

In Figur 4 sind die wesentlichen Komponenten eines Navigationssystems dargestellt. Solche Navigationssysteme sind grundsätzlich bekannt. Zentraler Bestandteil des Navigationssystems ist die Recheneinheit 20, die mit einer Eingabeeinheit 12 sowie einer optischen Ausgabeeinheit 13, die dem Monitor 2 entspricht, und einer akustischen Ausgabeeinheit 14 mit einem Lautsprecher verbunden ist. Ferner ist die Recheneinheit mit einem Lesegerät 15 zum Auslesen von kartographischen Daten aus einem Speicherelement verbunden. Zur Bestimmung der Fahrzeugposition ist die Recheneinheit ferner mit einer Satellitennavigationseinheit 16, einem Richtungssensor 17 und einem Wegstreckensensor 18 verbunden.

Anhand der Signale des Satellitennavigationsgerätes 16 wird durch ein geeignetes Programm in der Recheneinheit 20 die Fahrzeugposition bestimmt. Nach Eingabe des Zielortes über die Eingabeeinheit 12 wird anhand der kartographischen Daten, die von einem Speicherelement über das Lesegerät 15 der Recheneinheit 20 zugeleitet werden, durch ein ebenfalls an sich bekanntes Programm eine Route zwischen dem gegenwärtigen Standort und dem gewählten Zielort berechnet. Die Ausgabe von Zielführungsinformationen erfolgt optisch über die Ausgabeeinheit 13 und akustisch über die akustische Ausgabeeinheit 14. Die Recheneinheit ist ferner mit einem Radiogerät 19 verbunden, über das Verkehrsinformationen empfangen und an die Recheneinheit 20 zur Berücksichtigung bei der Routenberechnung weitergeleitet werden. Das in Zusammenhang mit der Figur 4 beschriebene Navigationssystem wird hier nur beispielhaft angegeben. Bei dem erfindungsgemäßen Navigationssystem mit der speziellen Anordnung der akustischen Ausgabeeinheit müssen nicht alle der in Figur 4 dargestellten Bestandteile vorhanden sein. Beispielsweise kann auf ein Lesegerät 15 verzichtet werden, wenn Landkartendaten über ein Mobilfunksystem von einem Zentralrechner in die Recheneinheit 20 übertragen werden.

## Patentansprüche

1. Anordnung eines Lautsprechers in der Mittelkonsole oder im Armaturenbrett eines Kraftfahrzeugs, wobei der Lautsprecher durch eine schall- und flüssigkeitsdurchlässige Abdeckung vom Fahrgastraum getrennt ist, die in einer von der vertikalen abweichenden Einbauebene angeordnet ist, dadurch gekennzeichnet, daß der Lautsprecher (6) in einem Gehäuse senkrecht im Fahrzeug angeordnet ist und das Gehäuse mindestens eine Öffnung (9) außerhalb der Abdeckung (Lautsprechergitter 5) aufweist, die ein Abfließen von in das Gehäuse eingedrungener Flüssigkeit ermöglicht.

2. Anordnung nach Anspruch 1, dadurch gekennzeichnet, daß die Abdeckung (5) unter einem Winkel von mehr als 30° zum Lautsprecher (6) angeordnet ist.

3. Anordnung nach Anspruch 1 oder 2, dadurch gekennzeichnet, daß die Abdeckung (5) rechtwinklig zum Lautsprecher (6) angeordnet ist.

4. Anordnung nach einem der vorhergehenden Ansprüche, dadurch gekennzeichnet, daß in dem Gehäuse eine Umlenkfläche (11) zur Umlenkung der vom Lautsprecher (6) ausgesendeten Schallwellen zu schalldurchlässigen Abdeckung (5) vorhanden ist.

5. Navigationssystem nach einem der vorhergehenden Ansprüche, dadurch gekennzeichnet, daß die Umlenkfläche (11) unter einem Winkel zum Lautsprecher (6) angeordnet ist, der etwa halb so groß ist wie der Winkel unter dem der schalldurchlässige Bereich (5) zum Lautsprecher (6) angeordnet ist.

6. Anordnung nach einem der vorhergehenden Ansprüche, dadurch gekennzeichnet, daß in der Bodenfläche (7) des Gehäuses mindestens eine Öffnung (9) vorhanden ist.

7. Anordnung nach einem der vorhergehenden Ansprüche, dadurch gekennzeichnet, daß im Verbindungsbereich der Bodenfläche mit einer Wandfläche des Gehäuses eine Öffnung vorhanden ist.

8. Navigationssystem für Kraftfahrzeuge mit einer zentralen Recheneinheit, die mittelbar oder unmittelbar mit einer Eingabeeinheit und einer einen Lautsprecher aufweisenden Ausgabeeinheit verbunden ist, sowie mit der Recheneinheit verbundenen Mitteln zur Bestimmung der Fahrzeugposition, wobei die Recheneinheit zur Berechnung einer Route zwischen einem Start- und einem Zielort sowie zur Ausgabe von Fahrhinweisen über den Lautsprecher ausgebildet ist, dadurch gekennzeichnet, daß die Eingabeeinheit (12) und der Lautsprecher (6) in einem gemeinsamen Gehäuse angeordnet sind, das einen schall- und flüssigkeitsdurchlässigen Bereich (Lautsprechergitter 5) zur Auskopplung der Schallwellen des Lautsprechers aus dem Gehäuse sowie mindestens eine Öffnung (9) außerhalb des schalldurchlässigen Bereichs im Bereich der Bodenfläche (7) des Gehäuses aufweist, die ein Abfließen von eingedrungener Flüssigkeit aus dem Gehäuse ermöglicht, und daß der Lautsprecher (6) senkrecht zur Bodenfläche (7) des Gehäuses angeordnet ist.

9. Navigationssystem nach Anspruch 8, dadurch gekennzeichnet, daß es für den Einbau in die Mittelkonsole des Kraftfahrzeugs ausgelegt ist, wobei der Lautsprecher (6) senkrecht im Fahrzeug angeordnet ist.

10. Navigationssystem nach Anspruch 8 oder 9, dadurch gekennzeichnet, daß der schalldurchlässige Bereich (5) unter einem Winkel von mehr als 30° zum Lautsprecher (6) angeordnet ist.

11. Navigationssystem nach einem der vorhergehenden Ansprüche, dadurch gekennzeichnet, daß der schalldurchlässige Bereich (5) senkrecht zum Lautsprecher (6) angeordnet ist.

12. Navigationssystem nach einem der vorhergehenden Ansprüche, dadurch gekennzeichnet, daß das Gehäuse eine Umlenkfläche (11) zur Umlenkung der vom Lautsprecher ausgesendeten Schallwellen zu dem schalldurchlässigen Bereich (5) aufweist.

13. Navigationssystem nach Anspruch 12, dadurch gekennzeichnet, daß die Umlenkfläche (11) unter einem Winkel zum Lautsprecher (6) angeordnet ist, der etwa halb so groß ist wie der Winkel unter dem der schalldurchlässige Bereich (5) zum Lautsprecher (6) angeordnet ist.

14. Navigationssystem nach einem der vorhergehenden Ansprüche, dadurch gekennzeichnet, daß die Öffnung (9) in der Bodenfläche (7) des Gehäuses angeordnet ist.

15. Navigationssystem nach einem der vorhergehenden Ansprüche, dadurch gekennzeichnet, daß die Öffnung im Verbindungsbereich der Bodenfläche mit einer Wandfläche angeordnet ist.
